# EUROPEAN PATENT APPLICATION

(11) **EP 4 163 326 A1**
(43) Date of publication of application: **12.04.2023**
(21) Application number: 21201561.4
(22) Date of filing: 08.10.2021
(51) Int. Cl.: C08J 9/00, C08J 9/224, C08J 9/232, C09D 161/28

(54) **COATING COMPOSITION FOR FREE-FLOWING FOAM PARTICLES AND FIRE-RESISTANT PARTICLE FOAM MOLDINGS**

(71) Applicant: BASF SE, 67056 Ludwigshafen am Rhein (DE)
(72) Inventor: DOERR, Dominik Michael, 67056 Ludwigshafen (DE); GUTTING, Andreas, 67056 Ludwigshafen (DE); KOENIG, Alexander, 67056 Ludwigshafen (DE); QUELL, Aggeliki, 67056 Ludwigshafen (DE); KELLER, Andreas, 67056 Ludwigshafen (DE)
(74) Representative: BASF IP Association

(57) **Abstract**

A composition comprising
(A) from 10 to 90 wt.-% of an aminoplast resin,
(B) from 10 to 90 wt.-% of ammonium polyphosphate,
(C) from 0 to 50 wt.-% of a flame-retardant synergist,
(D) from 0 to 10 wt.-% of an acidic hardener,
(E) from 0 to 60 wt.-% of water;
a process for producing coated foam particles based on thermoplastic polymers, free-flowing coated foam particles and fire-resistant particle foam moldings.

## Description

The present invention relates to a composition comprising
(A) from 10 to 90 wt.-% of an aminoplast resin,
(B) from 10 to 90 wt.-% of ammonium polyphosphate,
(C) from 0 to 50 wt.-% of a flame-retardant synergist,
(D) from 0 to 10 wt.-% of an acidic hardener,
(E) from 0 to 60 wt.-% of water;
a process for producing coated foam particles based on thermoplastic polymers, free-flowing coated foam particles and fire-resistant particle foam moldings.

EP 3 333 216 A1 discloses the use of a coating composition comprising aluminum hydroxide as a mineral flame retardant, an adduct or condensation product of melamine or urea and formaldehyde, a hardener and water for coating foam beads based on polystyrene, polyolefins or polyurethanes to increase fire resistance of foam moldings. Flame retardant properties are not sufficient for all applications and smoke production is too high.

WO 2008/145599 discloses expanded or expandable polystyrene beads, an intumescent and a fire-resistant binder, preferably expandable graphite in an aqueous solution of sodium silicate.

WO 2004/096900 discloses a foam plastic body with excellent incombustibility while maintaining impact absorption, moldability and heat insulation, prepared by introducing an inorganic or organic incombustible diaphragm-forming agent during the expansion molding process of an expandable plastic resin or the fusion molding process of expanded beads.

WO 2021/032738 discloses free-flowing coated foam particles based on thermoplastic polymer foam particles, wherein the coating comprises an aminoplast resin and an intumescent powder, selected from ammonium phosphate and expandable graphite for preparing fire resistant particle foam moldings. Expandable graphite may lead to shear-induced liberation of intercalated acid and polymerization of the binder during mixing with the coating composition. Thermal conductivity is too high.

The object of the present invention is to provide a coating composition for free-flowing foam particles based on thermoplastic polymer foam particles with an intumescent coating and a process for producing free-flowing foam particles to manufacture fire resistant particle foam moldings with reduced smoke generation and low thermal conductivity.

To solve the problem, the present invention provides a composition comprising
(A) from 10 to 90 wt.-% of an aminoplast resin,
(B) from 10 to 90 wt.-% of ammonium polyphosphate,
(C) from 0 to 50 wt.-% of a flame-retardant synergist,
(D) from 0 to 10 wt.-% of an acidic hardener,
(E) from 0 to 60 wt.-% of water.

Preferably the composition comprises
(A) from 15 to 40 wt.-% of an aminoplast resin,
(B) from 20 to 55 wt.-% of ammonium polyphosphate,
(C) from 5 to 30 wt.-% of a flame retardant synergist,
(D) from 0.1 to 5 wt.-% of an acidic hardener,
(E) from 20 to 49.9 wt.-% of water.

More preferably the composition comprises
(A) from 20 to 30 wt.-% of an aminoplast resin,
(B) from 20 to 40 wt.-% of ammonium polyphosphate,
(C) from 10 to 20 wt.-% of a flame retardant synergist,
(D) from 0.1 to 1 wt.-% of an acidic hardener,
(E) from 20 to 29.9 wt.-% of water.

Preferably the viscosity of the composition is in the range from 130 to 3000 mPas, more preferably in the range from 150 to 2000 mPas, determined using a rotational spindle viscometer (Brookfield Method according ISO 2555).

### Component A)

Preferably the aminoplast resin (A) is a precondesate of formaldehyde with melamine, urea, urethanes, cyanamide or dicyanamide, aromatic amines and/or sulfonamides or mixtures thereof. Particular preference is given to melamine-formaldehyde (MF) precondensates. The precondesates may be partially or fully etherified with alcohols, preferably C₁-C₄- alcohols, in particular methanol or ethanol.

Most preferably the aminoplast resin is a melamine-formaldehyde resin.

### Component B)

The composition comprises as component B) ammonium polyphosphate. Preferably ammonium polyphosphate (phase II) of formula (I)

[NH₄PO₃]n(OH)₂ (I)

with n > 1000 is used. Ammonium polyphosphate can be coated with melamine resin. Preferably component B) is used as uncoated, fine powder with a particle size distribution with at least 95 % (w/w) of particles with a diameter below 50 µm.

### Component C)

The composition comprises as component C) a flame-retardant synergist. Suitable flame-retardant synergist as component C) are carbohydrates, minerals, hydroxides, oxides, salts of acids or mixtures thereof. Such as aluminum hydroxide, sorbitol, calcium oxide or zinc borate. More preferably the flame-retardant synergist is selected from polyols with two or more hydroxyl groups or sugars. Most preferably pentaerythritol is used as flame-retardant synergist C).

### Component D)

Organic acids and inorganic acids can be used as hardener D) to continue condensation of the aminoplast resin, examples being hydrochloric acid, sulfuric acid, phosphoric acid, nitric acid, formic acid, acetic acid, oxalic acid, toluenesulfonic acids, amidosulfonic acids and also acid anhydrides. Nitric acid is the preferred curative used in the processes of the present invention.

### Component E)

The aminoplast resin is usually used in form of a solution or dispersion in water. Water can therefore be present in the composition as component E).

### Component F)

The composition may further comprise one or more organic or inorganic additives as component F), such as fillers, dyes, pigments, surfactants or compatibilizer. Compatibilizer may be advantageously used to enhance compatibility from foam particles or fillers with the aminoplast resin. The additives may be premixed with components (A) to (E).

The composition of the present invention is preferably used as coating composition for the preparation of free-flowing foam particles for producing fire-resistant particle foam moldings in conventional steam-chest molding equipment.

A preferred process for producing coated foam particles according to the invention comprises mixing the above-described composition with foam particles based on thermoplastic polymers and drying the coated foam particles. The beads can be dried with microwaves, infrared radiation or at a temperature in the range from 20 to 100 °C for 5 to 500 minutes, preferably in the range from 20 to 70 °C for 10 to 60 minutes. Preferably the drying time may be reduced if a stream of air, hot air or inert gas is applied.

The thermoplastic polymer foam particles may be any directly foamed thermoplastic polymer in particle form or prefoamed particles from expandable thermoplastic polymer particles. Preferably the foam particles are pre-foamed expandable polystyrene (EPS), expanded polypropylene (EPP), expanded polyethylene (EPE) or expanded thermoplastic polyurethane (ETPU).

The adhesion between the thermoplastic polymer foam particles and the aminoplast resin coating may be improved by using thermoplastic polymer foam particles with a certain surface roughness. Preferred thermoplastic polymer foam particles are therefore prefoamed particles from expandable styrene polymers (EPS), which have been produced by a melt-extrusion process or expandable styrene polymers produced by a suspension-polymerization process and precoated with a coating of zincstearate, glycerol esters or antistatics before pre-foaming.

A preferred process for producing coated foam particles comprise the steps:
(a) pre-expanding expandable polystyrene to foam particles with a density in the range from 10 to 30 kg/m³,
(b) mixing the foam particles from step (a) with a composition according to the invention as described above,
(c) drying the coated foam particles at a temperature in the range from 20 to 100 °C for 5 to 500 minutes, preferably in the range from 20 to 70 °C for 10 to 60 minutes.

Subject of the invention are further free-flowing foam particles obtainable by the process according to the invention. Free-flowing means that the particles do not stick together. To ensure that the coated foam particles do not stick together the moisture content after drying is preferably 8 wt.-% or less, more preferably below 5 wt.-%, determined with a halogen moisture analyzer.

The flowability of the coated foam particles determined according to DIN EN ISO 6186:1998-8 using a funnel with an outlet diameter of 25 mm is preferably below 10 seconds, more preferably below 5 seconds, most preferably between 1 and 4 seconds.

Preferred free-flowing coated foam particles are based on thermoplastic polymers, having at least a coating comprising:
(A) from 10 to 90 wt.-% of an aminoplast resin, preferably a melamine-formaldehyde resin
(B) from 10 to 90 wt.-% of ammonium polyphosphate,
(C) from 0 to 50 wt.-% of a flame-retardant synergist, preferably a carbohydrate,
(D) from 0 to 10 wt.-% of an acidic hardener,
(E) from 0 to 8 wt.-% of water.

In one preferred embodiment the free-flowing coated foam particles are based on polystyrene, having at least a coating consisting of:
(A) from 25 to 40 wt.-% of a melamine-formaldehyde resin,
(B) from 40 to 60 wt.-% of ammonium polyphosphate,
(C) from 10 to 25 wt.-% of a flame-retardant synergist, preferably a carbohydrate,
(D) from 0.1 to 5 wt.-% of the acidic hardener,
(E) from 0.1 to 5 wt.-% of water,

Preferably in the free-flowing coated foam particles the weight ratio of coating to uncoated foam particles is in the range from 1 : 1 to 5 : 1 more preferably in the range from 1.4 : 1 to 3,5 : 1.

The free-flowing coated foam particles according to the invention preferably have a bulk density in the range from 20 to 56 kg/m³.

The free-flowing coated foam particles according to the invention may be halogen-free. Preferably the free-flowing coated foam particles contain less than 2.5 wt.-% , more preferably 0.75 wt.-%, most preferably less than 0.05 wt.-% halogen, i.e. fluorine, chlorine, bromine or iodine. The weight percent refer to the individual halogen's fluorine, chlorine, bromine and iodine. Preferably also the sum of all halogens is less than 2.5 wt.-%, more preferably less than 0.75 wt.-%, most preferably less than 0.05 wt.-%. The halogen content refers to any halogen component in the free-flowing coated foam particles, which may be determined by atomic absorption spectroscopy or elemental analysis.

Subject of the invention is further a particle foam molding, which is obtainable by microwave molding, radio frequency molding or preferable by steam-chest molding of coated foam particles according to the invention.

The particle foam molding according to the invention preferably has a density in the range from 10 to 60 kg/m³, more preferably in the range from 20 to 56 kg/m³

The thermal conductivity (λ) of the insulation sheets determined at 10°C according to DIN EN 12667:2001-05 is preferably between 30 to 39 mW/(m*K).

The total smoke production (per unit area; SA) of the particle foam molding according to the invention after 1200 second is preferably below 600 m2/m², more preferably below 400 m²/m². The THR (Total heat release) is preferably below 30 MJ/m², more preferably below 27 MJ/m². SA and THR of insulation sheets are determined according ISO 5660-1:2019 using a Cone Calorimeter.

The particle foam molding according to the invention preferably has a maximum length of damaged material below 40 cm, preferably below 36 cm, determined using a Bunsen burner in accordance with DIN 54837: 2007-12 (Testing of materials, small components and component sections for rail vehicles - Determination of burning behavior using a gas burner). Furthermore, no melt-dropping or burning melt dropping occurs.

The particle foam molding according to the invention are preferably used for thermal insulation of buildings.

Hereinafter, the present invention is described in more detail.

### Examples

Raw materials:
- Neopor^{®} F 5200 Plus: Graphite-containing EPS, pentane content ca. 5.3 wt.-%, bead size 1.2 - 1.6 mm, flame retardant, produced by extrusion, BASF SE
- MF-resin: Kauramin^{®} Impregnating Resin 796 liquid, aqueous solution of melamine-formaldehyde condensation product, 60 wt.-% in water, pH 9,0 - 10, density 1.27 g/cm3, viscosity 120 - 160 mPa.s (23°C) according to DIN EN ISO 3219, appendix B
- AP: Ammonium phosphate, Acros Organics
- APP: Exolit^{®} APP 422 from Clariant, fine-particle ammonium polyphosphate (phase II), [NH₄PO₃]ₙ(OH)₂, n> 1000
- PER: pentaerythritol (flame-retardant synergist), Penpet GmbH

- EG: Expandable graphite ES 100 C10 from Graphit Kropfmühl GmbH, particle size distribution: min. 80% of particles below 150 µm, ash content max. 8 %, expandability 100 ml/g, pH 8.2.
- ATH: Aluminum trihydroxide (flame-retardant synergist), ThermoFischer Scientific
- Gypsum: REA Gypsum (CaSO₄ 2 H₂O), Knauf Gips KG

Measurements:
Moisture content was measured with a halogen moisture analyzer from Mettler Toledo (Model HB43-S).
Viscosity was determined using a Brookfield spindle Rheometer equipped with a standard spindle set at room temperature. The spindle was chosen according to the measured torque. In case of the coating spindle 5 was used with a rotation speed of 50 min⁻¹.
Bending strength was determined according to DIN EN 12089:2013-06 method B.
Thermal conductivity (λ) of insulation sheets was determined at 10°C according to DIN EN 12667:2001-05.
Total heat release (THR) after 1200 seconds and total smoke production per unit area of exposed specimen (SA) of insulation sheets was determined according to ISO 5660-1 2019-8 using a Cone Calorimeter.
Maximum length of damaged material was determined using a Bunsen burner in accordance with DIN 54837: 2007-12 (Testing of materials, small components and component sections for rail vehicles -Determination of burning behavior using a gas burner).

### Example 2:

Graphite-containing EPS particles (Neopor^{®} F5200 Plus) were prefoamed with steam to foam particles with a bulk density of 16 kg/m³.

A liquid coating mixture was prepared from 369 g of Kauramin KMT 796 (containing 40 wt.% Water), 461 g of a mixture from ammonium polyphosphate Exolit^{®} APP 222 and pentaerythritol (weight ratio APP422/PER = 3:1) and 2.8 g nitric acid. 51.7g water was added to adjust the liquid coating mixture to a viscosity of 650 mPas.

The wet coating was mixed with 300 g prefoamed EPS particles (Neopor^{®} F5200 Plus) in a mixer for 5 minutes at 21 °C. The coated foam beads were filled in strainer and dried at room temperature for 30 minutes with a stream of air applied. The beads were occasionally moved by hand. The free-flowing coated foam beads had a water content of 0.4 weight percent after drying. Afterwards the beads were fused to moldings in a conventional steam-chest molder.

### Example 1 - 14

Coting mixture, coated foam particles and particle foam molding were prepared as described for Example 1 with composition listed in Table 1.

Properties of the molded parts from the coated foam particles are listed in Table 2. In the burning test using a Bunsen burner in accordance with DIN 54837: 2007-12 an intumescent layer was built around the foam particles of the foam molding. No burning melt was dropping down. Maximum length of damaged material was determined.

### Comparative Example C1

Coating mixture, coated foam particles and foam molding was prepared according to Example 3 of EP 3 333 216 A1 using foamed particles of Neopor^{®} F5200 Plus and ammonium phosphate (AP). The foam molding shows low thermal conductivity but was unsatisfactory in the burning test.

### Comparative Example C2

Coating mixture, coated foam particles and foam molding was prepared according to Example 6 of WO 2021/032738 using foamed particles of Neopor^{®} F5200 Plus, expandable graphite EG and gypsum. The foam molding passes the burning test, but thermal conductivity is high.

**Table 1: Composition of Coating and coated foam particles**

| Example | Flame retardant composition (FR + Synergist) | MF-resin (dry) | Nitric acid | FR | Synergist 1 | Synergist 2 | Water | Viscosity [mPas] | Pre-foamed EPS particles | weight ratio of solids of coating composition to pre-foamed particles |
|---|---|---|---|---|---|---|---|---|---|---|
| | | Parts per weight added to 1 part MF-resin dry | | | | | | | parts per weight added to 1 part MF-resin dry | |
| 1 | Exolit 422 (APP) | 1 | 0.013 | 2.08 | 0.00 | 0.00 | *0.964* | *712* | *1.33* | 2.3 |
| 2 | Exolit 422 + PER (3:1) | 1 | 0.013 | 1.56 | 0.52 | 0.00 | *0.900* | *656* | *1.36* | 2.3 |
| 3 | Exolit 422 + PER (3:1) | 1 | 0.013 | 1.56 | 0.52 | 0.00 | *0.896* | *656* | *2.22* | 1.4 |
| 4 | Exolit 422 + PER + Urea (3:1:0.35) | 1 | 0.013 | 1.43 | 0.48 | 0.18 | *0.675* | - | *1.35* | 2.3 |
| 5 | Exolit 422 + PER + Melamin (3:1:0.35) | 1 | 0.013 | 1.43 | 0.48 | 0.18 | *0.675* | - | *1.35* | 2.3 |
| 6 | Exolit 422 + PER + Melamin | 1 | 0.013 | 2.08 | 0.00 | 0.00 | *1.098* | *712* | *1.33* | 2.3 |
| 7 | Exolit 422 + ATH (3:1) | 1 | 0.013 | 1.56 | 0.52 | 0.00 | *0.982* | | *1.33* | 2.3 |
| 8 | Exolit 422 + PER (2:1) | 1 | 0.013 | 1.39 | 0.69 | 0.00 | *0.831* | | *1.33* | 2.3 |
| 9 | Exolit 422 + PER (4:1) | 1 | 0.013 | 1.67 | 0.42 | 0.00 | *0.827* | | *1.33* | 2.3 |
| 10 | Exolit 422 + PER (3:1) | 1 | 0.013 | 1.87 | 0.62 | 0.00 | *0.948* | | *1.72* | 2.0 |
| 11 | Exolit 422 + PER (3:1) | 1 | 0.013 | 2.35 | 0.78 | 0.00 | *1.380* | | *2.00* | 2.1 |
| 12 | Exolit 422 + PER (3:1) | 1 | 0.013 | 2.50 | 0.84 | 0.00 | *1.580* | | *1.33* | 3.3 |
| 13 | Exolit 422 + PER (3:1) | 1 | 0.013 | 1.56 | 0.52 | 0.00 | *0.867* | | *1.00* | 3.1 |
| 14 | Exolit 422 + PER (3:1) | 1 | 0.013 | 1.17 | 0.39 | 0.00 | *0.833* | | *1.00* | 2.6 |
| C1 | AP | 1 | 0.013 | 0.07 | 0.00 | 0.00 | *0.667* | | *1.33* | 0.8 |
| C2 | Expandable Graphite + Gipsum (1:2) | 1 | 0.013 | 0.54 | 1.08 | 0.00 | *1.667* | | *1.35* | 2.0 |

**Table 2: Properties of molded parts from coated foam particles**

| Example | Density [kg/m3] | Thermal conductivity [mW/mK] | Bending strength [kPa] | THR [MJ/m²] | Total Smoke production (SA) [m²/m²] | Length of damaged material [cm] |
|---|---|---|---|---|---|---|
| 1 | 43 | 33 | 233 | 9.5 | 261.45 | 29 |
| 2 | 39 | 35 | 210 | 17.4 | 221.13 | 25 |
| 3 | 32 | 33 | 224 | 19.8 | 393.76 | 35 |
| 6 | 44 | 34 | 206 | 26.2 | 281.11 | 25 |
| 7 | 45 | 34 | 248 | 17.6 | 305.33 | 24 |
| 8 | 42 | 34 | 215 | 20 | 371.77 | 25 |
| 9 | 42 | 34 | 204 | 19.2 | 268.2 | 23 |
| 10 | 41 | 34 | 225 | 19.2 | 200.65 | 26 |
| 11 | 43 | 35 | 180 | 18.6 | 102.85 | 28 |
| 12 | 56 | 38 | 168 | 16.6 | 118.18 | 22 |
| 13 | 55 | 38 | 210 | 17.7 | 95.66 | 21 |
| 14 | 44 | 36 | 181 | 22.1 | 183.45 | 25 |
| C1 | 24 | 31 | 147 | 31.5 | 699.65 | 43 |
| C2 | 39 | 40 | 261 | 27.9 | 195.41 | 16 |

## Claims

1. A composition comprising
(A) from 10 to 90 wt.-% of an aminoplast resin,
(B) from 10 to 90 wt.-% of ammonium polyphosphate,
(C) from 0 to 50 wt.-% of a flame-retardant synergist,
(D) from 0 to 10 wt.-% of an acidic hardener,
(E) from 0 to 60 wt.-% of water.

2. A composition comprising
(A) from 15 to 40 wt.-% of an aminoplast resin,
(B) from 20 to 55 wt.-% of ammonium polyphosphate,
(C) from 5 to 30 wt.-% of a flame retardant synergist,
(D) from 0.1 to 5 wt.-% of an acidic hardener,
(E) from 20 to 49.9 wt.-% of water.

3. A composition according to any of claims 1 to 3, wherein the viscosity of the composition is in the range from 120 to 3000 mPas determined using a rotational spindle viscometer (Brookfield Method according ISO 2555).

4. A composition according to claim 1 or 2, wherein the aminoplast resin is a melamine-formaldehyde resin.

5. A composition according to any of claims 1 to 3, wherein the flame-retardant synergist is selected from carbohydrates, polyols, hydroxides or mixtures thereof.

6. A process for producing coated foam particles comprising mixing a composition according to any of claims 1 to 5 with foam particles based on thermoplastic polymers and drying the coated foam particles.

7. A process according to claim 6, wherein the foam particles are pre-foamed expandable polystyrene, expanded polypropylene, expanded polyethylene or expanded thermoplastic urethan.

8. A process according to claim 7 comprising the steps:
(a) pre-expanding expandable polystyrene to foam particles with a density in the range from 10 to 30 kg/m3,
(b) mixing the particles from step (a) with a composition according to any of claim 1 to 5,
(c) drying the coated foam particles at a temperature in the range from 20 to 100 °C for 5 to 500 minutes.

9. Free-flowing coated foam particles based on thermoplastic polymers, wherein the coating comprises:
(A) from 10 to 90 wt.-% of an aminoplast resin,
(B) from 10 to 90 wt.-% of ammonium polyphosphate,
(C) from 0 to 50 wt.-% of a flame-retardant synergist
(D) from 0 to 10 wt.-% of an acidic hardener,
(E) from 0 to 8 wt.-% of water.

10. Free-flowing coated foam particles according to claim 9, wherein the weight ratio of coating to uncoated foam particles is in the range from 1 : 1 to 5 : 1.

11. Free-flowing coated foam particles according to claim 9 or 10 having a bulk density in the range from 20 to 55 kg/m³.

12. Free-flowing coated foam particles according to any of claims 9 to 11, wherein the free-flowing foam particles contain less than 2.5 wt.-% halogen.

13. A particle foam molding, which is obtainable by molding of free-flowing coated foam particles according to any of claims 9 to 12.

14. A particle foam molding according to claim 13 having a thermal conductivity in the range from 30 to 39 mW/m*K, determined at 10°C according to DIN EN 12667:2001-05.

15. A particle foam molding according to any of claims 13 to 14 having a total heat release (THR) for 1200 seconds below 30 MJ/m², determined according to ISO 5660-1:2015 using a Cone Calorimeter.

16. A particle foam molding according to any of claims 13 to 15 having a total smoke production per unit area after 1200 seconds below 600 m²/m² determined according to ISO 5660-1:2015 using a Cone Calorimeter.

17. A particle foam molding according to any of claims 13 to 16 having a maximum length of damaged material below 40 cm, determined using a Bunsen burner in accordance with DIN 54837: 2007-12.

18. Use of the particle foam molding according to any of claims 13 to 17 for thermal insulation of buildings.
